(19) Europäisches Patentamt / European Patent Office / Office européen des brevets

(11) **EP 4 491 584 A1**

(12) **EUROPEAN PATENT APPLICATION**

(43) Date of publication:
**15.01.2025 Bulletin 2025/03**

(21) Application number: **24188487.3**

(22) Date of filing: **12.07.2024**

(51) International Patent Classification (IPC):
**C02F 1/34** $^{(2023.01)}$  **B01F 25/312** $^{(2022.01)}$
**B01F 25/313** $^{(2022.01)}$

(52) Cooperative Patent Classification (CPC):
**C02F 1/34; B01F 25/3121; B01F 25/3123;**
**B01F 25/3131; B01F 25/3132;** C02F 2201/003;
C02F 2301/024; C02F 2301/066; C02F 2301/08;
C02F 2303/26; C02F 2305/023

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.07.2023 PL 44557223**

(71) Applicant: **H+H LABS PSA**
**82-300 Elblag (PL)**

(72) Inventors:
• **GEIGER, Katarzyna Anna**
**41-409 Mys owice (PL)**
• **RYABIKO, Kataryna**
**02-966 Warszawa (PL)**
• **Panasjuk, Pavel**
**02-966 Warszawa (PL)**
• **Machinskiy, Oleksandr**
**Petro-Pavlivska Borschahivka (UA)**

(74) Representative: **Tyrala, Magdalena**
**Abapat. Kancelaria Patentowa**
**Ul. Tadeusza Kosciuszki 19/1**
**44-200 Rybnik (PL)**

(54) **METHOD AND DEVICE OF WATER AND SEWAGE TREATMENT**

(57) The water purification device includes a hydrodynamic cavitator. The device is characterized by: a purified water inlet, a circulation pump (1, 18), a circulation pipeline with a control valve (3, 16, 41); at least one confusor (4, 37, 39, ) connected on one side to the circulation pipeline (2, 20, 36); at least one chemical reagent inlet pipe (7, 23, 26, 29) including a valve (11) inserted into the confusor (4, 37, 39, ); at least one rotor cavitator (8) mounted on the inlet pipe (7, 23, 26, 29) inside the confusor (4, 37, 39, ); at least one conical cavitator (6, 21, 24, 27) located at the end of the inlet pipe (7, 23, 26, 29) inside the confusor (4, 37, 39, ) and behind the impeller cavitator (8); at least one flow chamber (5, 22, 25, 28) located downstream of the confusor (4, 37, 39, ); a diffuser (9, 30) placed downstream of the flow chamber (5, 22, 25, 28); purified water outlet (10, 34). The water purification method using a hydrodynamic cavitator is characterized by the following steps: a) introducing purified water into the circulation circuit (2, 20) containing a valve (3, 16) controlling its flow; b) introducing purified water from the circulation circuit (2, 20) through at least one confusor (4, 37, 39, ) into at least one flow chamber (5, 22, 25, 28) while simultaneously supplying a chemical reagent through at least one inlet pipe (7, 23, 26, 29) containing a valve (11) and ending with a conical cavitator (6, 21, 24, 27) into the cavitation cavity created in the flow inside the flow chamber (5, 22, 25, 28), thereby hydrodynamic processes take place in the flow chamber (5, 22, 25, 28) and the water is purified as a result of the reaction between the chemical reagent and the purified water; c) introducing the obtained mixture into the confusor (9, 30) where, by changing the flow pressure, the chemical reaction of water and the chemical reagent is intensified; d) discharge of purified water and steam and vapors of chemical reagents through the outlet (10, 35, 34) of the circulation circuit (2, 20, 36).

Fig. 1

**Description**

The subject of the invention is a method for purifying sewage and water, for example river and mine water, using chemical solutions and hydrodynamic cavitation, where intensive mixing of various components, liquid and gaseous phases is necessary. The invention also relates to a device implementing this method, including a hydrodynamic device.

In the state of the art, there are known methods of chemical purification of polluted river waters and sewage with chemical reagents, followed by the use of a single-pass pressure flotation scheme, as a result of which air bubbles together with chemical reagents break up the purified liquid and carry the contamination to the foam layer. The resulting sediment is then removed and the purified water, depending on its further purpose, is additionally filtered through sand or carbon filters, and in other cases it is subjected to ionizing treatment or ultraviolet radiation for disinfection.

There are also known methods of using cavitation modes to aerate sewage. An example of a sewage aerator using the cavitation phenomenon is described in publication SU1191428A1. Another publication SU1468870A1 describes a cavitation aerator which includes an impeller composed of an upper and lower disc, between which a ring rotor is mounted consisting of blades connected to each other by the upper and lower rings. During operation of the aerator, hydrodynamic oscillations are created, which intensify cavitation and mixing. This method is complicated and difficult to achieve due to the unstable collapse of the cavitation bubbles in the rear part of the cavitation cavity.

A hydrodynamic cavitation reactor for mixing and dispersing gas-liquid systems is known from the Soviet application description SU1125041A1. The reactor contains a flow chamber with a cavitator installed inside and a branch for introducing the reacting component. The cavitator is made in the form of two concentric truncated cones facing each other with large bases with radial blades between them, the inner part of which is made of a central and radial channel, while the smaller base of the outer cone is placed at the level of the large base of the inner cone. The radial blades are mounted at the level of the large base of the outer cone. The hydrodynamic cavitation reactor also includes a confusor, a diffuser and a manifold for supplying the base substance.

The purpose of the invention is to intensify the chemical treatment process of river water, sewage and mine water, to reduce energy costs and the consumption of chemical reagents in the treatment process.

The essence of the invention is a water purification device containing a hydrodynamic cavitator. The device is characterized by the fact that it contains:

- purified water inlet, circulation pump, circulation pipeline with control valve,
- at least one confusor connected on one side to the circulation pipeline,
- at least one chemical reagent inlet pipe containing a valve, inserted into the confusor,
- at least one rotor cavitator mounted on the inlet pipe inside the confusor,
- at least one conical cavitator placed at the end of the inlet pipe inside the confusor and behind the impeller cavitator,
- at least one flow chamber located behind the confusor,
- diffuser (9, 30) located behind the flow chamber,
- purified water outlet.

Preferably, the device includes many chemical reagent inlet pipes ending with conical cavitators inside the confusor and, respectively, many flow chambers located behind the confusors.

Preferably, the device contains three stages of cavitation implemented by three cavitators, where the flow limitation d/D, i.e. the ratio of the diameter d of the chemical reagent pipes to the diameter D of the flow chambers, is 0.55 in the first stage, 0.45 in the second stage, 0.35 in third degree.

Preferably, the circuit of the circulating pipeline of the device includes:

- a circulation tank placed in front of the confusor, fluidly connected, preferably through a solenoid valve, with the water tank to be cleaned,
- a swirl cavitation tank located behind the diffuser and containing a first outlet for gaseous reaction products of water and chemical reagents and a second outlet for purified water and an outlet for the circulation of purified water with a solenoid valve,
- a circulation pump placed in the circulation and a filling pump placed in front of the circulation tank.

Preferably, the device includes many solenoid valves on the water supply, in the purified water circuit and on the purified water outlet.

The essence of the invention is also a method of water purification using a hydrodynamic cavitator, which is characterized by the following steps:

a) introducing purified water into the circulation system containing a valve controlling its flow,
b) introducing purified water from the circulation circuit (through at least one confusor into at least one flow chamber while simultaneously supplying a chemical reagent through at least one inlet pipe containing a valve and ending with a conical cavitator to the cavitation cavity created in the flow inside the flow chamber, thereby hydrodynamic processes take place and the water is purified as a result of the reaction between the chemical reagent and the purified water,

c) introducing the obtained mixture into the confusor where, by changing the flow pressure, the chemical reaction of water and the chemical reagent is intensified,

d) discharge of purified water and steam and vapors of chemical reagents through the circulation outlet.

Preferably, purification is carried out in many cycles, where the water purified in the first cycle is re-circulated to carry out stages b) and c).

Preferably, the water purified after step c) is subjected to spin cavitation carried out in the spin cavitation tank (12).

According to the invention, during cavitation treatment of sewage and river water, it is possible to reduce the level of impurities and pollutants without blowing or bubbling air and oxidizing agents, but only by changing the structure of water molecules and the occurrence of oxidizing radicals. Thanks to this, additional flotation can be eliminated or its duration can be significantly shortened. The ionization of the aqueous solution and the structural change of radicals in the water change the purification process, both in terms of purification steps and chemical consumption.

The invention is presented in the drawing, where:

Fig. 1 schematically shows a water purification device, with a half-section showing the cavitation module.

Fig. 2 shows a multi-stage cavitation module

Fig. 3 shows a diagram of a device with a multi-stage cavitation module

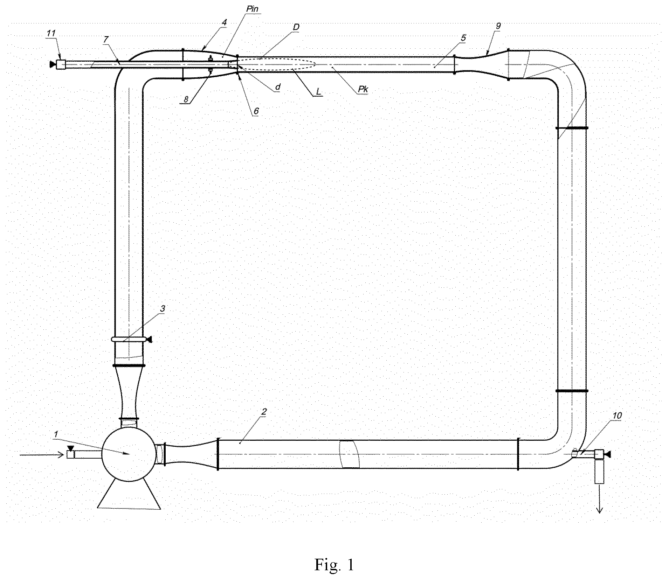

The device according to the invention, in the most general version, shown in Fig. 1. The device includes a circulation pump 1, a circulation pipeline 2 with a control valve 3, a reagent inlet pipe 7 with a valve 11, a confusor 4, a rotor cavitator 8, conical cavitator 6, flow chamber 5, diffuser 9 and branch pipe 10. Rotor cavitator 8 has the form of a super cavitator rotor rotating freely under the influence of the main liquid flow and is mounted on the inlet pipe 7 inside the confusor 4 and in front of the conical cavitator 6. Conical cavitator 6 it has the form of a cone with an opening angle of 90 ° and is located inside the flow chamber 5 at its inlet. The diffuser 9 is located behind the flow chamber 5. The branch pipe 10 with a valve is used to collect purified water from the circulation pipeline 2.

In the device, the degree of flow restriction, i.e. the ratio d / D, of the diameter d of the conical cavitator in its end part to the diameter D of the working section of the flow chamber 5, where intensive ejective mixing of water with the chemical reagent takes place, to the diameter is 0.5, and the cavitation number æ = 0.1-0.17. In this case, the length of the cavity L is in the range L = 150-170 mm.

Achieving these parameters allows obtaining the maximum number of cavitation bubbles in the tail of the L cavity, thanks to the hydrodynamic cavitation effect, with minimal energy costs.

The volume and number of cavitation bubbles in the tail part of the L cavity determine the maximum cumulative effect of their collapse, and thus ensure optimal contact of chemical reagents with the water flow to be treated.

The above geometric parameters of the cavitation elements d / D and the hydrodynamic characteristics of the cavitation modes æ ensure intense ejective mixing of water and chemicals. Chemical consumption is reduced by 20-25%,

Partial ionization of the processed liquid stream is also important, which allows for disinfection of the stream without the use of additional water treatment steps, such as the use of ultraviolet light, electric discharges or treatment with preparations containing chlorine.

The device works as follows.

Water or sewage intended for cleaning through the pipe by the circulation pump 1 fills the circulation circuit 2. The water is directed through the pipeline to the confusor 4. The chemical reagent is fed to the pipe 7, which ends with a conical cavitator 6. The flow of the chemical reagent is regulated by the valve 11. The flow of the liquid in circulation circuit is regulated by valve 3. When the water flows around the cavitator 6, a cavitation cavity of length L is created in the flow chamber 5, the pressure of which corresponds to the saturated vapor pressure of the liquid flowing around the cavitator 6. Because the working fluid, i.e. the water subjected to purification, during the cleaning process in the circulation circuit has a temperature in the range of 20 °C, respectively, a vacuum is created in the cavity, i.e. the pressure in the cavity corresponds to the saturated vapor pressure of the liquid at a temperature of 20 °C. In this way, the chemical reagent for water purification is intensively thrown into the cavity through pipe 7.

The flow rate of the chemical reagent can be adjusted using valve 11 or valve 3 by changing the circulation flow rate.

The rotor cavitator 8 is also flowed by the stream of working fluid. Then cavitation bubbles are partially formed on its blades, which then enter the flow chamber 5. The rotor cavitator 8, on the one hand, has the function of increasing the number of cavitation bubbles, and on the other hand, it contributes to the increase in pressure in front of the conical cavitator 6 in order to realize a stable developed cavitation mode behind the cavitator 6. This allows the energy of the main flow of the circulation pump 1 to be used to increase the pressure before the conical cavitator 6, and also increases the volume of cavitation bubbles in the diffuser zone 9 and increases the cumulative effect of these bubbles and the effectiveness of chemical reactions in water purification.

The resulting mixture of chemical reagent and water enters the rear part of the cavitation cavity L in flow chamber 5, where, as a result of intense turbulent mixing of cavitation bubbles with the reagent, a chemical reaction of water purification takes place.

In order to enhance the cumulative effect of the collapse of cavitation bubbles, a diffuser 9 is installed at the outlet of the flow chamber 5, in which, by changing the flow pressure, an enhanced chemical reaction of the interaction of water and the chemical reagent takes place. This intensification occurs as a result of the increase in the cumulative effect of the collapse of cavitation bubbles in the high pressure zone. At the same time, as mentioned earlier, water molecules split into radicals and the oxidation processes of organic substances in purified water intensify.

Ionization of the flow during the implementation of cavitation modes occurs due to the cumulative effects of the collapse of cavitation bubbles at the phase boundary.

Dissociation of water molecules and dissolved organic and inorganic substances occurs. Water molecules are divided into H and OH radicals, which accumulate inside the bubble. When the cavitation bubble collapses in the local volume around and inside it, high pressure fields of $10^2$ to $10^3$ MPa are created, the temperature increases, cumulative structures and shock waves appear. This leads to intense turbulent mixing and initiation of chemical reactions. In this case, H and OH radicals and their recombination products $H_2$ and $H_2O_2$ pass into the purified liquid and enter into an oxidation reaction.

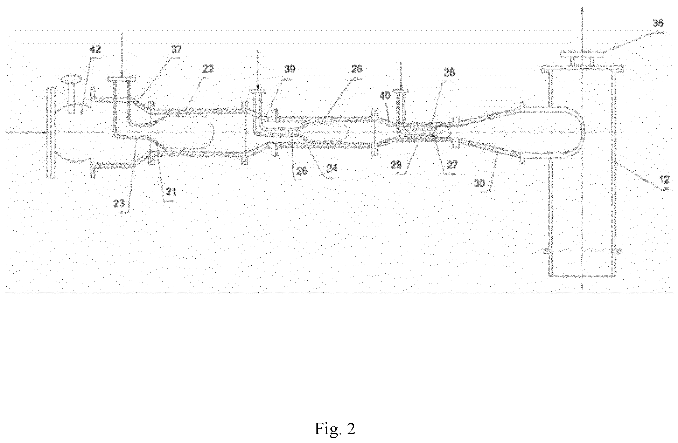

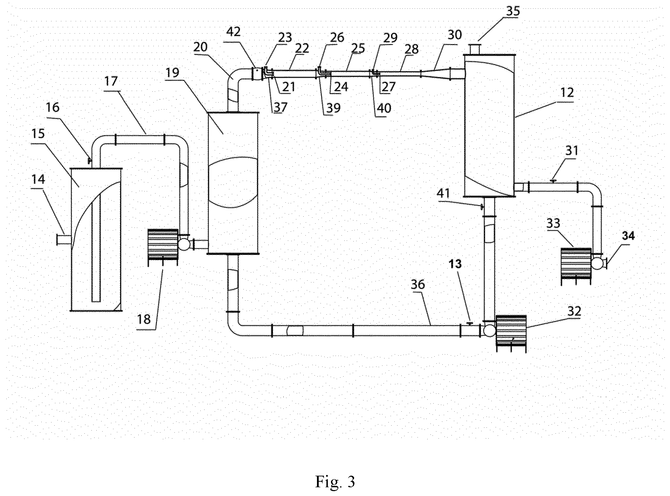

An example of a water purification device containing multiple cavitation modules is shown in Fig. 2 and Fig. 3.

Fig. 2 shows a three-stage cavitation module, where an example flow limitation d/D is 0.55 in the first stage, 0.45 in the second stage, 0.35 in the third stage.

The device includes a valve 3 for regulating the flow of the liquid to be purified, three conical cavitators 6 with confusors 4, three flow chambers 5, tubes 7 supplying chemical reagents to the cavitators 6, a diffuser 9 located at the end of the cavitation stages and a swirl cavitation tank 12 with a vapor outlet chemical 35.

Fig. 3 shows a diagram of the entire water and sewage treatment device in an exemplary embodiment including three stages of cavitation.

The water and sewage treatment device includes a tank - settling tank 15, to which water to be purified is supplied through the inlet pipe 14. The tank 15 has an outlet, behind which there is a solenoid valve 16 on the pipeline 17. A filling pump 18 is installed on the pipeline 17. The pipeline is connected to the tank 19 for the purified water circulation. A pipe 20 of the purified water circuit is led out of the tank 19, ending with a confusor 37. In front of the confusor there may be a gate valve 42 to regulate the flow rate. Behind the confusor 37, a rotor cavitator 8 is installed. The rotor cavitator 8 is located in front of the first conical cavitator 21 on the circumference of the tube 23. Behind the confusor 37 there is the first working flow chamber 22. Through the confusor 37 the first supply tube 23 is led to the first working flow chamber 22 chemical reagent terminated with a conical cavitator 21. A cavitation cavity is created behind the conical cavitator 21. Behind the first working flow chamber, another second confusor 39 is placed, through which a second tube 26 supplying the chemical reagent is introduced into the second working flow chamber 25, ending with a second conical cavitator 24. Similarly, here, the second conical cavitator 24 creates a cavitation cavity, to the beginning of which a chemical reagent is introduced. Behind the second flow chamber 25 there is a third confusor 40, a third tube 29 supplying the chemical reagent, a third conical cavitator 27 and a third working flow chamber 28 in which the cavitation cavity is created. Behind the third flow chamber 28 there is a diffuser 30, which increases the effect of collapsing the air bubbles and thus mixing the substances and reactions between them. Behind the diffuser 30 is a swirl cavitation tank 12, which includes an outlet 35 for removing gaseous reaction products of water and chemical reagents. The tank 12 also includes a purified water outlet with a solenoid valve 31. Behind the solenoid valve in the pipeline there is a pump 33 for pumping out purified water. The tank 12 contains a third outlet with a solenoid valve 41 in the purified water circuit. A circulation pump 32 is installed in the pipeline 36 of the purified water circuit. The pipeline 36 is led to the tank 19 of the purified water circuit.

The device works as follows. Contaminated water enters the settling tank 15 through the inlet pipe 14. After filling the settling tank 15, the solenoid valve 16 opens and the filling pump 18, located in the pipeline 17, pumps the purified water into the purified water tank 19. Then, the solenoid valve 16 closes and the water begins to circulate in the water treatment circuit using the pump 30. The purified water flows through the pipe 20 to the diffuser 27, where the first cavitator 31 with an additional rotor cavitator 8 is placed. The first cavitation cavity is created in the first working flow chamber 22. The first tube 23 supplying the chemical reagent is led to the cavitation cavity. The first chemical reagent for water purification is mixed in the first cavitation cavity. The process is repeated in subsequent cavitation stages, carried out by the second cavitator 24, the second tube 26 supplying the chemical reagent to the second cavitation cavity in the second flow working chamber 25, and the third cavitator 27, the third tube 29 supplying the chemical reagent to the third cavitation cavity in the third flow working chamber 28. Each cavitation cavity may be supplied with the same or different chemical reagents for water purification depending on the type of contamination. After the reaction, the water flows into the diffuser 30, where the cavitation bubbles collapse intensively. After the confusor 30, water is poured into the vortex cavitation tank 12. In the tank 12, the water flow is braked, which creates a vortex. This helps remove the gases produced in the reaction. Thanks to this, it is not necessary to use additional pumps and devices for degasification of the flow. The tank 12 has an outlet 35 for removing gaseous reaction products of purified water and reagents. If repeated or additional purification is necessary, the water from the tank 12 is recirculated through the open solenoid valve 13 using the circulation pump 32 through the water treatment circuit pipeline 36 to the water treatment circuit tank 19 and the process is repeated. After achieving the desired purification quality, the solenoid valve 13 is closed and the solenoid valve 31 is opened to drain the purified water. Water is pumped out of the circuit by means of the pump 33 through the nozzle 34 of the outlet pipe. Simultaneously or subsequently, the solenoid valve 16 is opened and another portion of water to be cleaned is taken from the settling tank 15 to the tank 19.

The above example, as would be understood by one skilled in the art, illustrates a non-limiting preferred application of cavitation water purification. The example shows 3 cavitation levels, but this is not a limitation. One skilled in the art can implement a system of devices containing one, two, three or more cavitation stages.

Qualitative indicators of river water purification using developed cavitation modes in accordance with the proposed purification method are presented in Table 1.

Table 1. quality indicators of purified water

| No | The name of the indicator | Unit | Polluted water | Water filtered by a mechanica l filter | water after cavitation cleaning | water after sand and carbon filters |
|----|---------------------------|------|----------------|----------------------------------------|---------------------------------|-------------------------------------|
| 1 | PH value | | 7.8 | 7.2 | 6.6 | 7.2 |
| 2 | Weighted invasion | mg/l | 12.0 | <0.5 | <0.5 | 200.0 |
| 3 | Ammonium | mg/l | 0.32 | 0.32 | 0.05 | 0.32 |
| 4 | Nitrite | mg/l | 0.45 | 0.45 | 0.05 | 0.04 |
| 5 | Nitrate | mg/l | 0.75 | 0.75 | 0.05 | 0.75 |
| 6 | Sulfate | mg/l | 455.0 | 485.0 | 2.1 | 485.0 |
| 7 | chlorides | mg/l | 2100.0 | 2100.0 | 79.4 | 2100.0 |
| 8 | Phosphates | mg/l | 0.075 | 0.075 | 0.01 | 0.075 |
| 9 | Iron | mg/l | 0.41 | 0.05 | - | 4.1 |
| 10 | Basicity | mg/l | 6.20 | 6.2 | 0.3 | 6.1 |
| 11 | Stiffness | mg/l | 22.0 | 22.0 | 0.2 | 10 p.m |
| 12 | Dry residue | mg/l | 5050.0 | 5,150.00 | 159.0 | 4,105.00 |
| 13 | Oil products | mg/l | 0.57 | 0.1 | - | 2.0 |
| 14 | Residual chlorine | mg/l | - | 1.0 | - | 1 |

Example 1.

10 m$^3$ of initial river water at a temperature of 20 °C is fed to circulation circuit 2, where, using circulation pump 1, the speed V at the inlet to the flow chamber 5 reaches a speed of 20 m/s. Behind cavitators 8 and 6, bubbles and a stable cavitation cavity L are formed, respectively. Valve 11 regulates the flow of chemical reagent into the cavity behind cavitator 6. The reagent is ejected under the influence of reduced pressure in the cavitation cavity. The optimal cavitation number in this case is achieved by adjusting the pressure and flow rate of the liquid that is supplied by pump 1 through valve 3.

As experimental studies have shown, the maximum result of river water purification is achieved at æ = 0.17 and with the degree of flow restriction d / D = 0.5 and the length of the cavitation cavity L = 150 mm, where d is the diameter of the conical cavitator in its end part , D is the diameter of the flow chamber. With specific geometric and hydrodynamic parameters, the number of cavitation bubbles in the diffuser zone 9 due to the cumulative effect of their collapse is maximum, and the intensity of chemical reactions reaches a maximum, which ensures high quality of river water purification. The presence of the cavitator 8 solves two problems: the number of cavitation bubbles and their dispersion increases, and it ensures optimal energy consumption for the implementation of hydrodynamic cavitation modes in the second stage in the flow chamber 5. In this case, the specific electricity consumption is from 0.06 kWh/m$^3$.

Example 2

Purification is carried out similarly to example 1, the parameters of the technological mode are as follows
V = 25 m/s; æ =0.10; d/D = 0.5; L =170mm; N = 0.1 kWh/m3

Treatment of the treated water was carried out for 5 minutes in both examples. The reduction in pollution levels in the first case was 20%, in the second by 30%.

The parameters of the method under other conditions are given in Table 2.

Table 2

| Parameter | Example | | | |
|---|---|---|---|---|
| | 1 | 2 | 3 | 4 |
| Flow speed in a river water treatment device at the inlet to the flow chamber in $V_{input}$ m/s | 25 | 20 | 15 | 10 |
| Cavitation number ( æ ) * $æ = \dfrac{Pin - Pk}{pVin/2}$ | 0.1 | 0.17 | 0.21 | 0.25 |
| Ejection coefficient | 2.5 | 2.0 | 1.6 | 1.2 |
| Flow restriction degree ( d / D ) | 0.5 | 0.5 | 0.5 | 0.5 |
| Processing time | 5 | 5 | 5 | 5 |
| Specific energy consumption kWh/m$^3$ ( N) | 0.1 | 0.06 | 0.055 | 0.045 |
| Reduction of chemical oxygen demand ( COD ), % | 30 | 20 | 10 | 9 |
| Recess length range ( L ) mm | 170 | 150 | 140 | 120 |
| * Where:<br>Pin - Pressure before cavitator (Pa)<br>Pκ - pressure in the valve (Pa)<br>d/D - flow reduction degree (blocking)<br>Vin - flow speed before the cavitator (m/s)<br>p - density<br>æ - cavitation number | | | | |

Example 3.

The data for performing the method according to the original, obtained as a result of calculations using known formulas and tests, are given in the example below.

Comparative tests were carried out with a rotary prototype of a cavitation-type rotary aerator according to the prior art publication SU1468870A1 , in which the rotor is made in the form of blades with holes in the body for sucking in a chemical or air oxidant.

The rotor is placed in a tight container with a capacity of up to 8 m$^3$ at 1 m from the liquid surface. The impeller diameter is 0.2 m. The initial level of chemical oxygen demand (COD) is 1060 at a temperature of 20 °C. The purification of contaminated water was carried out in the cavitation mode at the number of rotor revolutions n = 1500 rpm and n = 3000 rpm for 5 min. The reagent was sucked into the cavitation action area through the hollow shaft and holes in the rotor blades.

Dynamic pressure (N) in mwc . measured using a differential pressure gauge. Flow rate according to the formula:

$$V = \xi\sqrt{2qH} * 10^{-3}$$

where

V is the flow speed in m/s
ξ- flow coefficient (=0.995)
q - acceleration due to gravity, m/s
when n1 = 1500 rpm; V = 1 m/s.
n2 = 3000 rpm; V = 5 m/s.

Specific energy consumption is defined as the power used for mixing, related to powering the blades of the system. It was for:

n1 = 1500 rpm ; N 0.0796 kWh/m3
n2 = 3000 rpm ; N 0.039 kWh/m3

COD level within 5 minutes. at 1500 rpm it was 7% and at 3000 rpm = 10%.

The comparative data of the state-of-the-art prototype and the proposed method are summarized in Table 3.

Table 3

| Parameters | Cavitation type rotary aerator | | Device according to the invention | |
|---|---|---|---|---|
| COD reduction % | 7 | 10 | 9 | 30 |
| Specific electricity consumption kW/h m$^3$ | 0.039 | 0.0796 | 0.045 | 0.1 |
| Processing time (min) | 5 | | 5 | |
| rpm_ _ | 1500 | 3000 | 1500 | 3000 |

The analysis of the results allows us to conclude that the proposed method is better than the original from the state of the art. Energy losses in the prototype are 2-5 times higher, and quality indicators are 2-2.5 times lower. Therefore, the present invention will improve the quality of water purification, in particular river and mine water.

Example 4.

The mine water purification process was carried out on a prototype laboratory installation. The installation included 3 levels of cavitation. 4 to 5 cycles were performed. The reaction time was 2 minutes. The results are presented in Table 4.

Table 4

| LP | Parameter | Units | Mine water sample analysis | Limits of indicators for wastewater in Ukraine | Results after cleaning using a laboratory installation |
|---|---|---|---|---|---|
| 1 | pH indicator | pH unit | 7.22 | 6.5-9.0 | 8.0 |
| 2 | Temperature | °C | 18.3 | max. 40 | 20 |
| 3 | Chlorides | g/m3 | 27512.5 | 240 | 229 |
| 4 | Sulfur | g/m3 | 32 | 380 | 10.8 |
| 5 | Chemical oxygen consumption/amount of organic compounds in water | g/m3 | 962.3 | 500 | 375 |
| 6 | Phosphates | g/m3 | 2.16 | 8 | 1.03 |
| 7 | Suspension | g/m3 | 18 | 300 | 6.1 |
| 8 | Dry residue/mineralizatio n | g/m3 | 49598.00 | 1000 | 440 |
| 9 | Ammonium nitrogen | g/m3 | 55 | 20 | 11.5 |
| 10 | Water transparency | cm | 18 | - | - |
| 11 | Smell | - | Odorless | - | - |
| 12 | Surface-active substances | g/m3 | 24/04 | 20 | 8.06 |
| 13 | Fats | g/m3 | 1.08 | 50 | 0.61 |
| 14 | Oil derivatives | g/m3 | 0.08 | 4.5 | 0.03 |
| 15 | Color | - | colorless | - | - |

(continued)

| LP | Parameter | Units | Mine water sample analysis | Limits of indicators for wastewater in Ukraine | Results after cleaning using a laboratory installation |
|----|-----------|-------|---------------------------|-----------------------------------------------|--------------------------------------------------------|
| 16 | Water hardness | - | 100 | - | 41.3 |
| 17 | Hydrocarbons | - | 1.3 | - | - |

The quality of treated sewage does not meet the "Rules for sewage collection"; these rules concerned the standard used in Ukraine. Exceeding the permissible concentrations was detected in a number of indicators, 1 points 3, 5, 8, 9, 12. After cleaning in the laboratory installation, up to 95% of the volume of mine water supplied to the experiment was fully purified.

The device is used in all industries requiring water purification. The device is also used in broadly understood water and municipal management.

List of references

| | | | |
|---|---|---|---|
| 1. | circulation pump | 29. | a third tube supplying the chemical reagent |
| 2. | circulation circuit | | |
| 3. | valve | 30. | a diffuser increasing the effect of cavitation bubble collapse |
| 4. | confusor | | |
| 5. | flow chamber | 31. | solenoid valve for draining purified water |
| 6. | conical cavitator | | |
| 7. | chemical reagent tube | 32. | circulation pump for water treatment circuit |
| 8. | rotor cavitator | | |
| 9. | diffuser | 33. | pump for pumping out purified water |
| 10. | branch pipe | | |
| 11. | chemical reagent supply valve | 34. | outlet pipe nozzle |
| 12. | vortex cavitation tank | 35. | outlet of the swirl cavitation tank |
| 13. | electrovalve | 36. | water treatment circuit pipeline |
| 14. | inlet pipe with cleaning water | 37. | first confusor |
| 15. | settling tank - tank with water for cleaning | 38. | empty |
| | | 39. | second confusor |
| 16. | electrovalve | 40. | third confusor |
| 17. | pipeline | 41. | solenoid valve in the purified water circuit |
| 18. | filling pump | | |
| 19. | water purification circuit tank | 42. | gate valve to regulate fluid flow |
| 20. | water purification circuit pipe | | |
| 21. | the first conical cavitator | L - | length of the cavitation cavity |
| 22. | first working flow chamber | d - | diameter of the conical cavitator inpart. its end |
| 23. | the first tube supplying the chemical reagent | D | - diameter of the flow chamber |
| 24. | second conical cavitator | Pin- | Pressure before cavitator (Pa) |
| 25. | second working flow chamber | Pκ - | pressure in the valve (Pa) |
| 26. | a second tube supplying the chemical reagent | d/D - | flow reduction degree |
| 27. | third conical cavitator | Vin - | flow speed before the cavitator (m/s) |
| 28. | third working flow chamber | p - | density (r) |
| | | æ - | cavitation number |

**Claims**

1. A water purification device comprising a hydrodynamic cavitator, characterized that it comprises:

   - purified water inlet, circulation pump (1, 18), circulation pipeline with control valve,
   - at least one confusor (4, 37, 39) connected on one side to the circulation pipeline (2, 20, 36),
   - at least one chemical reagent inlet pipe (7, 23, 26, 29) containing a valve (11), inserted into the confusor (4, 37, 39),
   - at least one rotor cavitator (8,) mounted on the inlet pipe (7, 23, 26, 29) inside the confusor (4, 37, 39),
   - at least one conical cavitator (6, 21, 24, 27) located at the end of the inlet pipe (7, 23, 26, 29) inside the confusor (4, 37, 39) and behind the rotor cavitator (8),
   - at least one flow chamber (5, 22, 25, 28) located behind the confusor (4, 37, 39),
   - diffuser (9, 30) located behind the flow chamber (5, 22, 25, 28)
   - purified water outlet (10, 34)

2. The device according to claim 1, **characterized in that** it contains many chemical reagent inlet pipes (7, 23, 26, 29) ended with conical cavitators (6, 21, 24, 27) inside the confusor (4) and, respectively, many flow chambers (5, 22, 25, 28) placed behind the confusors (4, 37, 39).

3. The device according to claim 2, **characterized in that** it contains three stages of cavitation implemented by three cavitators (21, 24, 27), with the flow limitation d/D, i.e. the ratio of the diameter d of the chemical reagent pipes (23, 26, 29) to the diameter D of the flow chambers (22, 25, 28), is 0.55 in the first degree, 0.45 in the second degree, 0.35 in the third degree.

4. The device according to claim 1 or 2 or 3, **characterized in that** the circuit of the circulation pipeline (36) includes:

   - circulation tank (19) placed in front of the confusor (37), fluidly connected, preferably through a solenoid valve (1) with the tank (15) of water to be purified,
   - swirl cavitation tank (12) located behind the diffuser (30) and containing the first outlet (35) of gaseous reaction products of water and chemical reagents and the second outlet of purified water and an outlet for the circulation of purified water with a solenoid valve (41),
   - a circulation pump (32) placed in the circulation (36) and a filling pump (18) placed before the circulation tank (19).

5. The device according to any of the preceding claims, **characterized in that** it contains a plurality of solenoid valves (16), (31), (41) on the water supply, in the purified water circuit and on the purified water outlet.

6. A method of water purification using a hydrodynamic cavitator **characterized by** the following steps:

   a) introducing the purified water into the circulation circuit (2, 20) containing a valve (3, 16) controlling its flow,
   b) introduction of purified water from the circulation circuit (2, 20) through at least one confusor (4, 37, 39, ) to at least one flow chamber (5, 22, 25, 28) with simultaneous supply of a chemical reagent through at least one inlet pipe (7, 23, 26, 29) containing a valve (11) and ending with a conical cavitator (6, 21, 24, 27) into the cavitation cavity created in the flow inside the flow chamber (5, 22, 25, 28), thereby flow (5, 22, 25, 28) hydrodynamic processes take place and the water is purified as a result of the reaction between the chemical reagent and the purified water,
   c) introducing the obtained mixture into the confusor (9, 30) where, by changing the flow pressure, the chemical reaction of water and the chemical reagent is intensified,
   d) discharge of purified water and steam and vapors of chemical reagents through the outlet (10, 35, 34) of the circulation circuit (2, 20, 36).

7. The method according to claim 6, **characterized in that** the purification is carried out in many cycles, where the water purified in the first cycle is re-directed in the circulation circuit to carry out stages b) and c).

8. The method according to claim 6 or 7, **characterized in that** the water purified after step c) is subjected to swirl cavitation carried out in the swirl cavitation tank (12).

Fig. 1

Fig. 2

Fig. 3

Europäisches
Patentamt

European
Patent Office

Office européen
des brevets

# EUROPEAN SEARCH REPORT

Application Number

EP 24 18 8487

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/147303 A1 (SCHUELER ROLF [DE]) 7 August 2003 (2003-08-07) * paragraphs [0001], [0006], [0009], [0033] - [0047] * * paragraphs [0061] - [0087], [0118], [0119], [0121]; figures 1b, 5 * | 1-8 | INV. C02F1/34 B01F25/312 B01F25/313 |
| X | WO 96/09112 A1 (WEIZDOERFER ANTON & CO GMBH [DE]; KRAVETS BORIS K [UA]) 28 March 1996 (1996-03-28) * page 2, line 26 - page 7, line 10 * * pages 7-12; figure 3 * | 1-8 | |
| A | CN 114 940 527 A (UNIV CHENGDU TECHNOLOGY) 26 August 2022 (2022-08-26) * paragraphs [0045] - [0062]; figure 1 * | 1-8 | |

TECHNICAL FIELDS
SEARCHED (IPC)

C02F
B01F

The present search report has been drawn up for all claims

| Place of search | Date of completion of the search | Examiner |
|---|---|---|
| The Hague | 17 October 2024 | Vaz, Miguel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 18 8487

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2024

| Patent document cited in search report | | Publication date | Patent family member(s) | | Publication date |
|---|---|---|---|---|---|
| US 2003147303 | A1 | 07-08-2003 | AT | E258080 T1 | 15-02-2004 |
| | | | AU | 5617101 A | 03-09-2001 |
| | | | DE | 10009326 A1 | 30-08-2001 |
| | | | EP | 1280598 A2 | 05-02-2003 |
| | | | US | 2003147303 A1 | 07-08-2003 |
| | | | WO | 0162373 A1 | 30-08-2001 |
| WO 9609112 | A1 | 28-03-1996 | AU | 3651695 A | 09-04-1996 |
| | | | DE | 4433744 A1 | 28-03-1996 |
| | | | WO | 9609112 A1 | 28-03-1996 |
| CN 114940527 | A | 26-08-2022 | CN | 114940527 A | 26-08-2022 |
| | | | US | 2023271861 A1 | 31-08-2023 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- SU 1191428 A1
- SU 1468870 A1
- SU 1125041 A1